# EUROPÄISCHE PATENTSCHRIFT

(11) **EP 3 395 138 B1**
(45) Veröffentlichungstag und Bekanntmachung des Hinweises auf die Patenterteilung: **11.11.2020**
(21) Anmeldenummer: 18401037.9
(22) Anmeldetag: 11.04.2018
(51) Int. Cl.: A01B 69/00, A01B 69/04

(54) **VERFAHREN ZUM STEUERN EINES VON EINER ZUGMASCHINE GEZOGENEN LANDWIRTSCHAFTLICHEN BODENBEARBEITUNGSGERÄTS**
METHOD FOR CONTROLLING AGRICULTURAL SOIL PREPARATION EQUIPMENT PULLED BY A TRACTOR
PROCÉDÉ DE COMMANDE D'UN APPAREIL DE TRAITEMENT DU SOL AGRICOLE TRACTÉ PAR UN ENGIN DE TRACTION

(30) Priorität: 27.04.2017 DE 102017109008
(43) Veröffentlichungstag der Anmeldung: 31.10.2018
(73) Patentinhaber: Amazonen-Werke H. Dreyer GmbH & Co. KG, 49205 Hasbergen (DE)
(72) Erfinder: Fröschle, Heike, 49124 Georgsmarienhütte (DE); Ströbel-Fröschle, Markus, 49124 Georgsmarienhütte (DE); Albert, Jörn, 49080 Osnabrück (DE)

(56) Entgegenhaltungen:
- EP-A2- 1 338 186
- DE-A1-102010 054 103
- US-A1- 2005 288 834
- US-A1- 2010 256 871
- US-A1- 2012 296 529
- US-A1- 2014 277 954

## Beschreibung

Die Erfindung betrifft ein Verfahren zum Steuern eines von einer Zugmaschine gezogenen landwirtschaftlichen Bodenbearbeitungsgeräts nach dem Oberbegriff des Patentanspruchs 1 und ein landwirtschaftliches Bodenbearbeitungsgerät nach dem Oberbegriff des Patentanspruchs 9.

Während der Bodenbearbeitung durch ein landwirtschaftliches Bodenbearbeitungsgerät können unterschiedliche Bearbeitungssituationen auftreten, welche eine Anpassung der Einstellungen des landwirtschaftlichen Bodenbearbeitungsgeräts erfordern. Die Druckschrift US2014/0277954 A1 offenbart eine selbsteinstellende Sämaschine. Die Druckschrift DE 37 20 334 A1 schlägt hierzu einen Pflug mit einer hydraulischen Anlagenverstellung vor.

Außerdem sind bei der Bodenbearbeitung, beispielsweise beim Pflügen von Ackerboden, regelmäßig Kurvenfahren von der Zugmaschine und dem von der Zugmaschine gezogenen landwirtschaftlichen Bodenbearbeitungsgerät auszuführen. Dies gilt insbesondere an der Feldgrenze und im Bereich des Vorgewendes eines Feldes.

Bei einer Vielzahl von bekannten landwirtschaftlichen Bodenbearbeitungsgeräten muss der Bearbeitungsvorgang während der Kurvenfahrt unterbrochen werden, wodurch die Bearbeitung verzögert wird. Die Druckschriften DE 102 08 012 A1 und DE 10 2010 046 745 B4 beschreiben zwar die Möglichkeit, die Bodenbearbeitung während einer Kurvenfahrt fortzuführen, weisen aber gleichzeitig auf die damit verbundenen Nachteile, nämlich eine erhöhte Materialbelastung und eine geringere Arbeitsqualität, hin.

Moderne landwirtschaftliche Geräte sind teilweise bereits in der Lage Informationen zu einer Kurvenfahrt zu erfassen, eine praxistaugliche Methode zur unterbrechungsfreien Bodenbearbeitung auch während einer Kurvenfahrt ist jedoch nicht bekannt.

Die der Erfindung zugrunde liegende Aufgabe besteht somit darin, eine unterbrechungsfreie Bodenbearbeitung auch während des Ausführens von Kurvenfahrten zu ermöglichen, welche nicht zu einer wesentlichen Erhöhung der Materialbelastung und/oder des Kraftstoffverbrauchs und/oder einer wesentlichen Verschlechterung der Arbeitsqualität führt.

Die Aufgabe wird gelöst durch ein Verfahren der eingangs genannten Art, wobei die Geräteeinstellung des als Pflug ausgeführten landwirtschaftlichen Bodenbearbeitungsgeräts in Abhängigkeit der Informationen zu der Kurvenfahrt der Zugmaschine und/oder des landwirtschaftlichen Bodenbearbeitungsgeräts selbsttätig angepasst wird.

Die Erfindung macht sich die Erkenntnis zunutze, dass die Informationen zu der Kurvenfahrt der Zugmaschine und/oder des landwirtschaftlichen Bodenbearbeitungsgeräts genutzt werden können, um die Geräteeinstellung des landwirtschaftlichen Bodenbearbeitungsgeräts derart anpassen zu können, dass Kurvenfahrten während des Bearbeitungsvorgangs ohne eine wesentliche Erhöhung der Materialbelastung und des Kraftstoffverbrauchs und ohne eine wesentliche Verschlechterung der Arbeitsqualität ausgeführt werden können. Durch die an die jeweilige Kurvenfahrt angepasste Geräteeinstellung können Hindernisse ohne Verzögerung der Bearbeitung umfahren und gekrümmte oder abknickende Feldkonturen ohne Effizienzeinbußen bearbeitet werden. Die Informationen zu einer Kurvenfahrt der Zugmaschine und/oder des landwirtschaftlichen Bodenbearbeitungsgeräts umfassen vorzugsweise Informationen zum Kurvenverlauf, insbesondere einen oder mehrere Kurvenradi.

In einer bevorzugten Ausführungsform des erfindungsgemäßen Verfahrens umfasst das selbsttätige Anpassen der Geräteeinstellung des landwirtschaftlichen Bodenbearbeitungsgeräts in Abhängigkeit der Informationen zu der Kurvenfahrt der Zugmaschine und/oder des landwirtschaftlichen Bodenbearbeitungsgeräts das Ändern der Ausrichtung von Bodenbearbeitungswerkzeugen in Bezug auf einen Tragrahmen des landwirtschaftlichen Bodenbearbeitungsgeräts, an welchem die Bodenbearbeitungswerkzeuge angeordnet sind, und/oder das Ändern der Arbeitsbreite des landwirtschaftlichen Bodenbearbeitungsgeräts. Durch das Ändern der Ausrichtung von Bodenbearbeitungswerkzeugen in Bezug auf den Tragrahmen des landwirtschaftlichen Bodenbearbeitungsgeräts kann der Zugpunkt an die vorliegende Fahrsituation angepasst werden, wodurch die während der Kurvenfahrt auftretenden Seitenkräfte verringert werden. Alternativ kann die Ausrichtung der Bodenbearbeitungswerkzeuge in Bezug auf den Tragrahmen des landwirtschaftlichen Bodenbearbeitungsgeräts unverändert bleiben und der Tragrahmen mit den daran befestigten Bodenbearbeitungswerkzeugen relativ zu einer Kupplungseinrichtung des landwirtschaftlichen Bodenbearbeitungsgeräts verstellt werden. Wenn das landwirtschaftliche Bodenbearbeitungsgerät als Pflug ausgebildet ist, kann die Kupplungseinrichtung des landwirtschaftlichen Bodenbearbeitungsgeräts auch als Pflugturm bezeichnet werden. Unabhängig davon, ob die Ausrichtung der Bodenbearbeitungswerkzeuge in Bezug auf den Tragrahmen des landwirtschaftlichen Bodenbearbeitungsgeräts oder der Tragrahmen relativ zu der Kupplungseinrichtung des landwirtschaftlichen Bodenbearbeitungsgeräts geändert wird, kommt es zu einer Ausrichtung der Bodenbearbeitungswerkzeuge relativ zu Lenkern der Kupplungseinrichtung der Zugmaschine oder einer zur Kopplung mit den Lenkern der Kupplungseinrichtung der Zugmaschine eingerichteten Lenkertraverse. Aus der Verringerung der Seitenkräfte resultiert eine Reduzierung des Kraftstoffverbrauchs und der Materialbelastung. Insbesondere bei Feldgrenzen, welche einen Knick aufweisen, können die notwendigen Kurvenfahren beim Durchfahren des Knicks auch durch ein sukzessives Ändern der Arbeitsbreite des landwirtschaftlichen Bodenbearbeitungsgeräts verringert werden, bis der Knick aufgelöst ist und wieder gradlinige Fahrten über die gesamte Feldlänge ausgeführt werden können.

In einer anderen Ausführungsform des erfindungsgemäßen Verfahrens umfasst das Ändern der Ausrichtung von Bodenbearbeitungswerkzeugen in Bezug auf den Tragrahmen des landwirtschaftlichen Bodenbearbeitungsgeräts das Verstellen des Anlagewinkels der als Pflugschare ausgebildeten Bodenbearbeitungswerkzeuge und/oder das Verstellen von Anlageblechen der als Pflugschare ausgebildeten Bodenbearbeitungswerkzeuge. Das Verstellen des Anlagewinkels der Pflugschare kann durch eine Verstellung von Führungselementen erfolgen, welche während des Bearbeitungsvorgangs in Kontakt mit dem zu bearbeitenden Boden stehen. Die Führungselemente können als sogenannte Anlagebleche ausgebildet sein. Die Verstellung der Anlagebleche erfolgt vorzugsweise jeweils über ein hydraulisch, pneumatisch und/oder elektrisch einstellbares Stellelement, beispielsweise einen Stellzylinder. Vorzugsweise umfasst jedes Pflugschar ein eigenes Stellelement oder mehrere Pflugschare nutzen ein gemeinsames Stellelement. Vorzugsweise erfolgt das Verstellen des Anlagewinkels der als Pflugschare ausgebildeten Bodenbearbeitungswerkzeuge und/oder das Verstellen von Anlageblechen der als Pflugschare ausgebildeten Bodenbearbeitungswerkzeuge derart, dass die Ausrichtung der Anlagebleche sich dem Kurvenverlauf anpasst. Vorzugsweise werden die Unterlenker der Kupplungseinrichtung der Zugmaschine dabei gleichmäßig ausgelenkt, wobei die Anlagen im Vergleich zur Geradeausfahrt verdreht stehen.

Das erfindungsgemäße Verfahren wird ferner dadurch vorteilhaft weitergebildet, dass das landwirtschaftliche Bodenbearbeitungsgerät als Pflug ausgebildet ist und das selbsttätige Anpassen der Geräteeinstellung des landwirtschaftlichen Bodenbearbeitungsgeräts in Abhängigkeit der Informationen zu der Kurvenfahrt der Zugmaschine und/oder des landwirtschaftlichen Bodenbearbeitungsgeräts das Ändern der Vorderfurchenbreite des landwirtschaftlichen Bodenbearbeitungsgeräts und/oder das Ändern der Zuglinie zwischen dem landwirtschaftlichen Bodenbearbeitungsgerät und der Zugmaschine umfasst. Die Zuglinie ist die Verbindungslinie zwischen dem Schnittpunkt der verlängerten Unterlenker der Kupplungseinrichtung der Zugmaschine und dem geometrischen Mittelpunkt des landwirtschaftlichen Bodenbearbeitungsgeräts beziehungsweise des Schwerpunkts des landwirtschaftlichen Bodenbearbeitungsgeräts. Durch eine dem Kurvenverlauf angepasste dynamische Zuglinieneinstellung können die an dem landwirtschaftlichen Bodenbearbeitungsgerät entstehenden Seitenkräfte während einer Kurvenfahrt effektiv verringert werden, sodass der Verschleiß und der Kraftstoffverbrauch reduziert sind. Abhängig von der Ausführung des als Pflug ausgebildeten Bodenbearbeitungsgeräts, bedingt die Veränderung der Vorderfurchenbreite auch eine Änderung der Zuglinie. Somit ist es besonders bevorzugt, wenn bei der Verwendung entsprechender landwirtschaftlicher Bodenbearbeitungsgeräte eine aufeinander abgestimmte Anpassung der Zuglinie und der Vorderfurchenbreite erfolgt.

In einer anderen Ausführungsform des erfindungsgemäßen Verfahrens erfolgt das selbsttätige Anpassen der Geräteeinstellung des landwirtschaftlichen Bodenbearbeitungsgeräts direkt auf Grundlage der erfassten Informationen zu der Kurvenfahrt der Zugmaschine und/oder des landwirtschaftlichen Bodenbearbeitungsgeräts oder indirekt auf Grundlage von einer oder mehreren aus den Informationen zu der Kurvenfahrt der Zugmaschine und/oder des landwirtschaftlichen Bodenbearbeitungsgeräts berechneten Kurveneigenschaften. Die Anpassung der Geräteeinstellung kann grundsätzlich auf Grundlage von Parametern erfolgen, welche eine Kurve unmittelbar beschreiben, wie beispielsweise der Kurvenradius. Alternativ oder zusätzlich kann die Anpassung der Geräteeinstellung auch auf Grundlage von Parametern erfolgen, welche durch eine Kurvenfahrt beeinflusst werden. Parameter, welche durch eine Kurvenfahrt beeinflusst werden, können beispielsweise Kräfte sein, welche an oder zwischen den Kupplungseinrichtungen des landwirtschaftlichen Bodenbearbeitungsgeräts und/oder der Zugmaschine wirken, oder Geschwindigkeits- und/oder Beschleunigungswerte des landwirtschaftlichen Bodenbearbeitungsgeräts oder der Zugmaschine. Ein weiterer Parameter, welcher durch eine Kurvenfahrt beeinflusst wird, ist beispielsweise die Ausrichtung der Zugmaschine und des landwirtschaftlichen Bodenbearbeitungsgeräts zueinander.

Bevorzugt ist außerdem ein erfindungsgemäßes Verfahren, bei welchem das Erfassen von Informationen zu einer Kurvenfahrt der Zugmaschine und/oder des landwirtschaftlichen Bodenbearbeitungsgeräts das Erfassen des Lenkwinkels der Zugmaschine, das Erfassen der Drehrate und/oder der Geschwindigkeit der Zugmaschine und/oder des landwirtschaftlichen Bodenbearbeitungsgeräts und/oder das Erfassen der Längsbeschleunigung und/oder der Querbeschleunigung der Zugmaschine und/oder des landwirtschaftlichen Bodenbearbeitungsgeräts umfasst. Das Erfassen des Lenkwinkels der Zugmaschine erfolgt vorzugsweise über einen Lenkwinkelsensor, welcher den Einschlagwinkel des Lenkrades der Zugmaschine erfasst. Das Erfassen der Drehrate und/oder der Geschwindigkeit der Zugmaschine kann mittels einem oder mehreren Beschleunigungssensoren, Drehratensensoren und/oder Geschwindigkeitssensoren erfolgen, wobei der eine oder die mehreren Beschleunigungssensoren und/oder Geschwindigkeitssensoren an der Zugmaschine und/oder an dem landwirtschaftlichen Bodenbearbeitungsgerät angeordnet sein können. Das Erfassen der Längsbeschleunigung und/oder der Querbeschleunigung der Zugmaschine und/oder des landwirtschaftlichen Bodenbearbeitungsgeräts kann ebenfalls mittels einem oder mehreren Beschleunigungssensoren und/oder Geschwindigkeitssensoren erfolgen, wobei der eine oder die mehreren Beschleunigungssensoren und/oder Geschwindigkeitssensoren an der Zugmaschine und/oder an dem landwirtschaftlichen Bodenbearbeitungsgerät angeordnet sein können. Alternativ oder zusätzlich umfasst das Erfassen von Informationen zu einer Kurvenfahrt der Zugmaschine und/oder des landwirtschaftlichen Bodenbearbeitungsgeräts das Erfassen von geographischen Positionsdaten der Zugmaschine und/oder des landwirtschaftlichen Bodenbearbeitungsgeräts, insbesondere unter Verwendung eines Satellitensystems und/oder das Abrufen von Daten aus einer digitalen Karte, wobei die Daten vorzugsweise Spurdaten umfassen. Die digitale Karte kann auch eine Bodenkarte sein. Insbesondere kann auch die Historie der geographischen Positionsdaten gespeichert, insbesondere zwischengespeichert werden, sodass auf Grundlage der Historie der geographischen Positionsdaten direkt Informationen zu einer Kurvenfahrt, beispielsweise der Kurvenradius, hergeleitet werden können. Das Herleiten von Informationen zu einer Kurvenfahrt kann in diesem Fall auch ohne Karten- und Spurdaten erfolgen. Alternativ können geographische Positionsdaten mit Daten aus einer digitalen Karte, welche insbesondere auch Spurdaten umfasst, kombiniert verwendet werden, um Informationen zu einer Kurvenfahrt der Zugmaschine und/oder des landwirtschaftlichen Bodenbearbeitungsgeräts zu erfassen. Das Erfassen von Positionsdaten kann mittels eines Satellitennavigationsmoduls, insbesondere eines GPS-Moduls, erfolgen, wobei das Satellitennavigationsmodul an der Zugmaschine oder dem landwirtschaftlichen Bodenbearbeitungsgerät angeordnet sein kann.

In einer vorteilhaften Weiterbildung des erfindungsgemäßen Verfahrens umfasst das Erfassen von Informationen zu einer Kurvenfahrt der Zugmaschine und/oder des landwirtschaftlichen Bodenbearbeitungsgeräts das Erfassen von einer oder mehreren auf das landwirtschaftliche Bodenbearbeitungsgerät wirkenden Kräften, insbesondere an einer Unterlenkertraverse des landwirtschaftlichen Bodenbearbeitungsgeräts und/oder das Erfassen von einer oder mehreren auf die Zugmaschine wirkenden Kräften, insbesondere die auf die Unterlenker der Zugmaschine wirkenden Kräfte. Die Unterlenkertraverse des landwirtschaftlichen Bodenbearbeitungsgeräts ist vorzugsweise mit den Unterlenkern der Kupplungseinrichtung der Zugmaschine gekoppelt. Insbesondere erfolgt das Erfassen der an der Unterlenkertraverse des landwirtschaftlichen Bodenbearbeitungsgeräts wirkenden Kräfte über zwei beabstandet voneinander angeordnete Kraftmesseinrichtungen, wobei die Kraftmesseinrichtungen vorzugsweise jeweils im Koppelbereich der Unterlenker der Kupplungseinrichtung der Zugmaschine angeordnet sind. Die Kraftmesseinrichtungen können auch direkt an den Unterlenkern der Kupplungseinrichtung der Zugmaschine angeordnet sein. Alternativ oder zusätzlich umfasst das Erfassen von Informationen zu einer Kurvenfahrt der Zugmaschine und/oder des landwirtschaftlichen Bodenbearbeitungsgeräts das Erfassen der Auslenkung eines oder mehrerer Lenker der Zugmaschine, insbesondere der Unterlenker oder eines Oberlenkers und/oder das Erfassen der auf die Achsen der Zugmaschine wirkenden Kräfte. Das Erfassen der Auslenkung des einen oder der mehreren Lenker der Zugmaschine kann beispielsweise über Wegaufnehmer oder Drehgeber erfolgen. Alternativ oder zusätzlich kann die Auslenkung des einen oder der mehreren Lenker der Zugmaschine auch mittels einer oder mehreren Kameras erfasst werden. Das Erfassen der auf die Achsen der Zugmaschine wirkenden Kräfte kann beispielsweise mittels Kraftmesseinrichtungen erfolgen, welche im Bereich der Räder der Zugmaschine angeordnet sind.

Darüber hinaus ist ein erfindungsgemäßes Verfahren bevorzugt, bei welchem das Erfassen von Informationen zu einer Kurvenfahrt der Zugmaschine und/oder des landwirtschaftlichen Bodenbearbeitungsgeräts durch die Zugmaschine und/oder das landwirtschaftliche Bodenbearbeitungsgerät erfolgt. Vorzugsweise sind die Zugmaschine und das landwirtschaftliche Bodenbearbeitungsgerät über eine Datenschnittstelle signalleitend verbunden, sodass erfasste Daten ausgetauscht werden können. Auf diese Weise können beispielsweise Messeinrichtungen, welche zur Umsetzung weiterer Funktionen der Zugmaschine oder des landwirtschaftlichen Bodenbearbeitungsgeräts bereits genutzt werden, auch im Rahmen der selbsttätigen Anpassung der Geräteeinstellung des landwirtschaftlichen Bodenbearbeitungsgeräts Verwendung finden. Auf diese Weise wird die Teileanzahl reduziert und die Systemkomplexität nicht unnötig erhöht.

Die der Erfindung zugrunde liegende Aufgabe wird außerdem durch ein als Pflug ausgeführtes landwirtschaftliches Bodenbearbeitungsgerät der eingangs genannten Art gelöst, wobei das landwirtschaftliche Bodenbearbeitungsgerät eine Steuerungseinrichtung umfasst, welche dazu eingerichtet ist, einen Steuerungsbefehl zum selbsttätigen Anpassen der Geräteeinstellung des landwirtschaftlichen Bodenbearbeitungsgeräts in Abhängigkeit der Informationen zu der Kurvenfahrt der Zugmaschine und/oder des landwirtschaftlichen Bodenbearbeitungsgeräts zu erzeugen. Hinsichtlich der Vorteile und möglichen Modifikationen des erfindungsgemäßen landwirtschaftlichen Bodenbearbeitungsgeräts wird zunächst auf die Vorteile und möglichen Modifikationen des erfindungsgemäßen Verfahrens verwiesen.

In einer bevorzugten Ausführungsform weist das erfindungsgemäße landwirtschaftliche Bodenbearbeitungsgerät Bodenbearbeitungswerkzeuge, insbesondere Pflugschare, und einen Tragrahmen, an welchem die Bodenbearbeitungswerkzeuge angeordnet sind, auf. Das landwirtschaftliche Bodenbearbeitungsgerät umfasst ferner eine Werkzeugverstelleinrichtung und/oder eine zentrale Verstelleinrichtung, welche dazu eingerichtet sind, die Ausrichtung der Bodenbearbeitungswerkzeuge in Bezug auf den Tragrahmen auf Grundlage des Steuerungsbefehls zu ändern. Durch die Ausrichtung der Bodenbearbeitungswerkzeuge in Bezug auf den Tragrahmen kommt es gleichzeitig zu einer Ausrichtung der Bodenbearbeitungswerkzeuge relativ zu Lenkern der Kupplungseinrichtung der Zugmaschine oder einer zur Kopplung mit den Lenkern der Kupplungseinrichtung der Zugmaschine eingerichteten Lenkertraverse. Die Werkzeugverstelleinrichtung kann dazu eingerichtet sein, den Anlagewinkel von als Pflugschare ausgebildeten Bodenbearbeitungswerkzeugen und/oder Anlagebleche von als Pflugschare ausgebildeten Bodenbearbeitungswerkzeugen zu verstellen. Der Anlagewinkel der Pflugschare kann durch die Verstellung von Führungselementen erfolgen, welche während des Bearbeitungsvorgangs in Kontakt mit dem zu bearbeitenden Boden stehen. Die Führungselemente können als sogenannte Anlagebleche ausgebildet sein. Zur Verstellung kann die Werkzeugverstelleinrichtung ein oder mehrere hydraulisch, pneumatisch und/oder elektrisch einstellbare Stellelemente, beispielsweise Stellzylinder, aufweisen. Vorzugsweise umfasst jedes Pflugschar ein eigenes Stellelement oder mehrere Pflugschare nutzen ein gemeinsames Stellelement. Alternativ oder zusätzlich kann die Verstellung des Anlagewinkels der Pflugschare mittels der zentralen Verstelleinrichtung erfolgen. Durch die Betätigung der zentralen Verstelleinrichtung erfolgt eine Verstellung, insbesondere eine Verdrehung, sämtlicher Schareinheiten gegenüber dem Tragrahmen, wobei die Schareinheiten jeweils ein Pflugschar und ein Führungselement aufweisen. Das Führungselement kann dabei als Anlageblech ausgebildet sein.

Außerdem ist ein landwirtschaftliches Bodenbearbeitungsgerät vorteilhaft, welches eine Arbeitsbreitenverstelleinrichtung, welche dazu eingerichtet ist, die Arbeitsbreite des landwirtschaftlichen Bodenbearbeitungsgeräts auf Grundlage des Steuerungsbefehls zu ändern, eine Vorderfurchenverstelleinrichtung, welche dazu eingerichtet ist, die Vorderfurchenbreite des landwirtschaftlichen Bodenbearbeitungsgeräts auf Grundlage des Steuerungsbefehls zu ändern, und/oder eine Zuglinienverstelleinrichtung, welche dazu eingerichtet ist, den Verlauf der Zuglinie zwischen dem landwirtschaftlichen Bodenbearbeitungsgerät und der Zugmaschine auf Grundlage des Steuerungsbefehls zu ändern, umfasst. Insbesondere bei Feldgrenzen, welche einen Knick aufweisen, können die notwendigen Kurvenfahren durch den Knick durch ein sukzessives Ändern der Arbeitsbreite mittels der Arbeitsbreitenverstelleinrichtung des landwirtschaftlichen Bodenbearbeitungsgeräts verringert werden, bis der Knick aufgelöst ist und wieder gradlinige Fahrten über die gesamte Feldlänge ausgeführt werden können. Die Zuglinienverstelleinrichtung kann dazu eingerichtet sein, die Ausrichtung des Tragrahmens mit den daran befestigten Bodenbearbeitungswerkzeugen relativ zu der Kupplungseinrichtung des landwirtschaftlichen Bodenbearbeitungsgeräts einzustellen. Eine veränderte Vorderfurche bedingt regelmäßig auch eine Veränderung der Zuglinie, sodass bei der Betätigung der Vorderfurchenverstelleinrichtung regelmäßig auch eine Anpassung der Ausrichtung der Anlagebleche notwendig ist. Wenn das landwirtschaftliche Bodenbearbeitungsgerät als Pflug ausgebildet ist, kann Kupplungseinrichtung des landwirtschaftlichen Bodenbearbeitungsgeräts auch als Pflugturm bezeichnet werden.

In einer anderen Ausführungsform des erfindungsgemäßen landwirtschaftlichen Bodenbearbeitungsgeräts umfasst die Erfassungseinrichtung einen Lenkwinkelsensor, einen Drehratensensor, einen Geschwindigkeitssensor, einen oder mehrere Beschleunigungssensoren, ein Satellitennavigationsmodul und/oder eine Einrichtung zum Abrufen von digitalem Kartenmaterial. Das Satellitennavigationsmodul kann beispielsweise ein GPS-Modul sein. Der Drehratensensor, der Geschwindigkeitssensor und/oder der eine oder die mehreren Beschleunigungssensoren sind vorzugsweise an dem Tragrahmen des landwirtschaftlichen Bodenbearbeitungsgeräts angeordnet. Vorzugsweise umfasst das landwirtschaftliche Bodenbearbeitungsgerät eine Speichereinrichtung, sodass die mittels des Satellitennavigationsmoduls erfassten geografischen Positionsdaten gespeichert, insbesondere zwischengespeichert werden können und auf Grundlage der Historie der geographischen Positionsdaten direkt Informationen zu der Kurvenfahrt des landwirtschaftlichen Bodenbearbeitungsgeräts hergeleitet werden können.

In einer weiteren Ausführungsform des erfindungsgemäßen landwirtschaftlichen Bodenbearbeitungsgeräts umfasst die Erfassungseinrichtung eine oder mehrere Kraftmesseinrichtungen, welche dazu eingerichtet sind, eine oder mehrere auf das landwirtschaftliche Bodenbearbeitungsgerät wirkende Kräfte, insbesondere die auf eine Unterlenkertraverse des landwirtschaftlichen Bodenbearbeitungsgeräts wirkenden Kräfte, zu erfassen. Die Unterlenkertraverse des landwirtschaftlichen Bodenbearbeitungsgeräts ist vorzugsweise dazu eingerichtet, mit den Unterlenkern der Kupplungseinrichtung der Zugmaschine gekoppelt zu werden. Vorzugsweise sind zwei Kraftmesseinrichtungen beabstandet voneinander an der Unterlenkertraverse angeordnet, wobei die Kraftmesseinrichtungen vorzugsweise jeweils im Koppelbereich der Unterlenker der Kupplungseinrichtung der Zugmaschine angeordnet sind. Das erfindungsgemäße landwirtschaftliche Bodenbearbeitungsgerät kann ferner einen oder mehrere Wegaufnehmer, einen oder mehrere Drehgeber und/oder eine oder mehrere Kameras aufweisen, welche dazu eingerichtet sind, die Auslenkung eines oder mehrerer Lenker der Zugmaschine, insbesondere der Unterlenker oder eines Oberlenkers, zu erfassen.

Weitere Einzelheiten der Erfindung sind der Figurenbeschreibung und den Zeichnungen zu entnehmen. Es zeigen
- Fig. 1: eine Zugmaschine und ein erfindungsgemäßes landwirtschaftliches Bodenbearbeitungsgerät während des Ausführens des erfindungsgemäßen Verfahrens;
- Fig. 2: die Zugmaschine und das erfindungsgemäße landwirtschaftliche Bodenbearbeitungsgerät aus der Fig. 1 während des Ausführens des erfindungsgemäßen Verfahrens;
- Fig. 3: die Zugmaschine und das erfindungsgemäße landwirtschaftliche Bodenbearbeitungsgerät aus der Fig. 1 während des Ausführens des erfindungsgemäßen Verfahrens;
- Fig. 4: eine Zugmaschine und ein erfindungsgemäßes landwirtschaftliches Bodenbearbeitungsgerät in einer schematischen Darstellung;
- Fig. 5a: eine zur Bearbeitung mit dem erfindungsgemäßen landwirtschaftlichen Bodenbearbeitungsgerät geeignete Feldkontur;
- Fig. 5b: eine weitere zur Bearbeitung mit dem erfindungsgemäßen landwirtschaftlichen Bodenbearbeitungsgerät geeignete Feldkontur; P17-052.doc
- Fig. 5c: eine weitere zur Bearbeitung mit dem erfindungsgemäßen landwirtschaftlichen Bodenbearbeitungsgerät geeignete Feldkontur;
- Fig. 6: ein erfindungsgemäßes landwirtschaftliches Bodenbearbeitungsgerät in einer Draufsicht; und
- Fig. 7: Bodenbearbeitungswerkzeuge eines erfindungsgemäßen landwirtschaftlichen Bodenbearbeitungsgeräts in einer perspektivischen Darstellung.

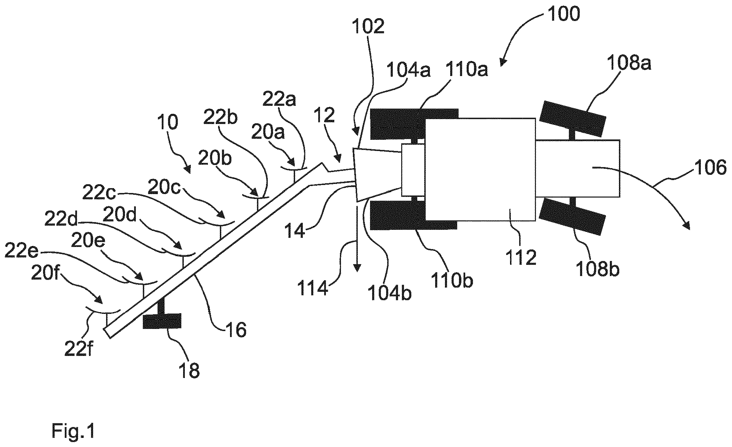

Die Fig. 1, die Fig. 2 und die Fig. 3 zeigen eine als Traktor ausgebildete Zugmaschine 100 und ein als Pflug ausgebildetes landwirtschaftliches Bodenbearbeitungsgerät 10 während des Ausführens des erfindungsgemäßen Verfahrens.

Das landwirtschaftliche Bodenbearbeitungsgerät 10 weist eine Kupplungseinrichtung 12 mit einer Unterlenkertraverse 14 auf. Die Unterlenkertraverse 14 ist mit den Unterlenkern 104a, 104b einer Kupplungseinrichtung 102 der Zugmaschine 100 gekoppelt.

An der Kupplungseinrichtung 12 des landwirtschaftlichen Bodenbearbeitungsgeräts 10 ist ein Tragrahmen 16 befestigt, wobei die Ausrichtung der Kupplungseinrichtung 12 des landwirtschaftlichen Bodenbearbeitungsgeräts 10 zu dem Tragrahmen 16 veränderbar ist. An dem Tragrahmen 16 ist eine Radaufhängung befestigt, welche mit einem Stützrad 18 verbunden ist. Das Stützrad 18 stützt das landwirtschaftliche Bodenbearbeitungsgerät 10 gegenüber dem zu bearbeitenden Ackerboden ab.

An dem Tragrahmen 16 sind insgesamt sechs als Pflugschare ausgebildete Bodenbearbeitungswerkzeuge 20a-20f befestigt, wobei die Bodenbearbeitungswerkzeuge 20a-20f jeweils ein Anlageblech 22a-22f umfassen. Die Anlagebleche 22a-22f sind während des Bearbeitungsvorgangs in Kontakt mit dem zu bearbeitenden Ackerboden und sorgen für eine ausreichende Seitenführung des landwirtschaftlichen Bodenbearbeitungsgeräts 10.

Die Zugmaschine weist neben der Kupplungseinrichtung 102 zwei Vorderräder 108a, 108b, zwei Hinterräder 110a, 110b und eine Führerkabine 112 auf.

In der in der Fig. 1 dargestellten Fahrsituation sind die Vorderäder 108a, 108b eingeschlagen, sodass sich die Zugmaschine 100 in einer Kurvenfahrt befindet und sich in die Richtung 106 bewegt. Durch die Kurvenfahrt der Zugmaschine 100 bewegen sich die Unterlenker 104a, 104b der Kupplungseinrichtung 102 der Zugmaschine 100 in die Richtung 114. Die Kurvenfahrt bedingt, dass der zuvor eingestellte Zugpunkt des landwirtschaftlichen Bodenbearbeitungsgeräts 10 beziehungsweise die Zuglinie zwischen dem landwirtschaftlichen Bodenbearbeitungsgerät 10 und der Zugmaschine 100 nunmehr zu hohen Seitenkräften an dem landwirtschaftlichen Bodenbearbeitungsgerät 10 führt. Diese hohen Seitenkräfte führen zu einem erhöhten Kraftstoffverbrauch und einem gesteigerten Verschleiß. Bei dem dargestellten landwirtschaftlichen Bodenbearbeitungsgerät 10 zeigt sich die nicht-situationsadäquate Einstellung auch daran, dass die Unterlenker 104a, 104b der Kupplungseinrichtung 102 der Zugmaschine 100 nicht spiegelsymmetrisch gegenüber der Längsachse der Zugmaschine 100 ausgerichtet sind beziehungsweise die Unterlenkertraverse 14 der Kupplungseinrichtung 12 des landwirtschaftlichen Bodenbearbeitungsgeräts nicht senkrecht zu der Längsachse der Zugmaschine 100 ausgerichtet ist.

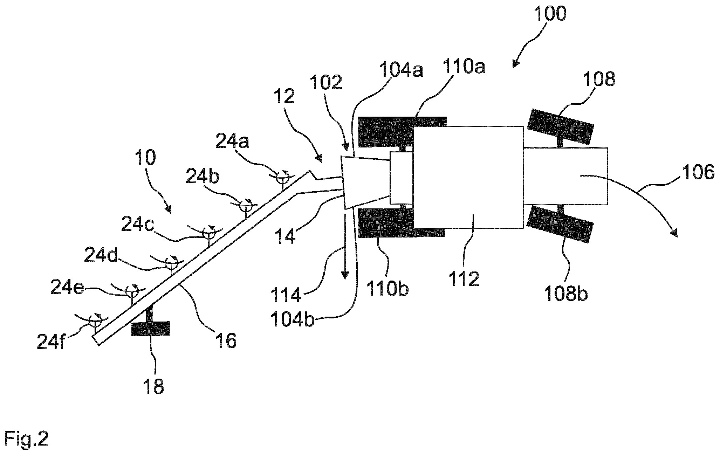

Die Fig. 2 zeigt, dass die Geräteeinstellung des landwirtschaftlichen Bodenbearbeitungsgeräts 10 durch Ändern der Ausrichtung der Bodenbearbeitungswerkzeuge 20a-20f in Bezug auf den Tragrahmen 16 des landwirtschaftlichen Bodenbearbeitungsgeräts 10 an die sich durch die Kurvenfahrt ergebende neue Fahrsituation angepasst wird.

Das Ändern der Ausrichtung der Bodenbearbeitungswerkzeuge 20a-20f erfolgt durch ein Verstellen der Anlagebleche 22a-22f der als Pflugschare ausgebildeten Bodenbearbeitungswerkzeuge 20a-20f. Die Anlagebleche 22a-22f werden in die mit 24a-24f bezeichneten Richtungen verdreht.

Damit die Einstellung der Anlagebleche 22a-22f derart erfolgt, dass die Seitenkräfte an dem landwirtschaftlichen Bodenbearbeitungsgerät 10 zur Reduzierung des Kraftstoffverbrauchs und des Verschleißes minimiert werden, werden zuvor Informationen zu einer Kurvenfahrt der Zugmaschine 100 oder des landwirtschaftlichen Bodenbearbeitungsgeräts 10 erfasst. Die Einstellung der Anlagebleche 22a-22f erfolgt dann in Abhängigkeit der Informationen zu der Kurvenfahrt der Zugmaschine 100 oder des landwirtschaftlichen Bodenbearbeitungsgeräts 10.

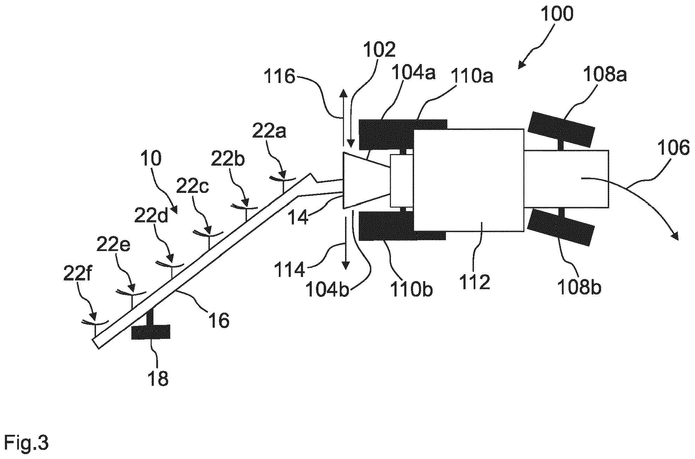

Die Fig. 3 zeigt anschaulich die ursprüngliche Ausrichtung der Anlagebleche 22a-22f und die nachfolgend aufgrund der erfassten Kurvenfahrt eingestellte Ausrichtung der Anlagebleche 22a-22f übereinander.

Durch die Ausrichtung der Anlagebleche 22a-22f ergibt sich eine Korrektur der Unterlenkerausrichtung in die Richtung 116. Die Verstellung der Anlagebleche 22a-22f führt somit auch zu einer Neuausrichtung der Unterlenker 104a, 104b der Kupplungseinrichtung 102 der Zugmaschine 100. Bei dem dargestellten landwirtschaftlichen Bodenbearbeitungsgerät 10 führt die Einstellung der Anlagebleche 22a-22f dazu, dass die Unterlenker 104a, 104b der Kupplungseinrichtung 102 der Zugmaschine 100 wieder spiegelsymmetrisch gegenüber der Längsachse der Zugmaschine 100 ausgerichtet sind beziehungsweise die Unterlenkertraverse 14 der Kupplungseinrichtung 12 des landwirtschaftlichen Bodenbearbeitungsgeräts 10 wieder senkrecht zu der Längsachse der Zugmaschine 100 ausgerichtet ist.

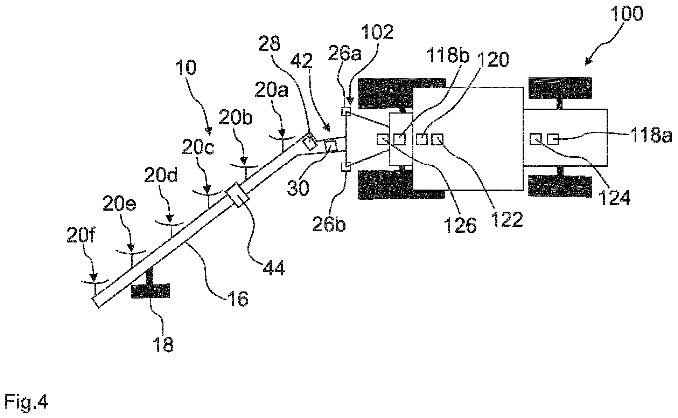

Die Fig. 4 zeigt ebenfalls eine als Traktor ausgebildete Zugmaschine 100 und ein als Pflug ausgebildetes landwirtschaftliches Bodenbearbeitungsgerät 10. Beispielsweise handelt es sich bei der Zugmaschine 100 und dem landwirtschaftlichen Bodenbearbeitungsgerät 10 um die Zugmaschine 100 und das landwirtschaftliche Bodenbearbeitungsgerät 10, welche in den Fig. 1 bis 3 dargestellt sind.

Das landwirtschaftliche Bodenbearbeitungsgerät 10 umfasst eine Erfassungseinrichtung 42 und eine Steuerungseinrichtung 44.

Die Erfassungseinrichtung 42 ist dazu eingerichtet, Informationen zu einer Kurvenfahrt des landwirtschaftlichen Bodenbearbeitungsgeräts 10 und/oder der das landwirtschaftliche Bodenbearbeitungsgerät 10 ziehenden Zugmaschine 100 zu erfassen. Hierzu weist die Erfassungseinrichtung 42 zwei Kraftmesseinrichtungen 26a, 26b, einen Drehratensensor 28 und einen Positionssensor 30 auf.

Mittels des Drehratensensors 28 kann die Drehrate des landwirtschaftlichen Bodenbearbeitungsgeräts 10 erfasst werden, sodass auf Grundlage der Daten des Drehratensensors 28 Informationen zu der Kurvenfahrt des landwirtschaftlichen Bodenbearbeitungsgeräts 10 abgeleitet werden können. Außerdem können unter Berücksichtigung der Abmaße und der Ausgestaltung des landwirtschaftlichen Bodenbearbeitungsgeräts 10 und der Zugmaschine 100 Informationen zu der Kurvenfahrt der Zugmaschine 100 aus den Daten des Drehratensensors 28 abgeleitet werden.

Mittels des Positionssensors 30, welcher ein Satellitennavigationsmodul umfasst, können geografische Positionsdaten erfasst werden, wobei die Historie der geographischen Positionsdaten zwischengespeichert wird, sodass auf Grundlage der Historie der geographischen Positionsdaten direkt Informationen zu der Kurvenfahrt des landwirtschaftlichen Bodenbearbeitungsgeräts 10 hergeleitet werden können.

Mittels der Kraftmesseinrichtungen 26a, 26b können die auf die Unterlenkertraverse 14 des landwirtschaftlichen Bodenbearbeitungsgeräts 10 wirkenden Kräfte erfasst werden. Auf Grundlage der Daten der Kraftmesseinrichtungen 26a, 26b können dann Informationen zu der Kurvenfahrt der Zugmaschine 100 abgeleitet werden.

Die Steuerungseinrichtung 44 ist dazu eingerichtet, einen Steuerungsbefehl zum selbsttätigen Anpassen der Geräteeinstellung des landwirtschaftlichen Bodenbearbeitungsgeräts 10 in Abhängigkeit der Informationen zu der Kurvenfahrt der Zugmaschine 100 und/oder des landwirtschaftlichen Bodenbearbeitungsgeräts 10 zu erzeugen. Das Anpassen der Geräteeinstellung umfasst dabei insbesondere eine geeignete Einstellung der Ausrichtung der Anlagebleche 22a-22f der als Pflugschare ausgebildeten Bodenbearbeitungswerkzeuge 20a-20f.

Die Zugmaschine 100 umfasst zwei Kraftmesseinrichtungen 118a, 118b, einen Drehratensensor 120, einen Positionssensor 122, einen Lenkwinkelsensor 124 und einen Wegaufnehmer 126.

Die Kraftmesseinrichtung 118a ist an der Vorderachse der Zugmaschine 100 angeordnet. Die Kraftmesseinrichtung 118b ist an der Hinterachse der Zugmaschine 100 angeordnet. Mittels der Kraftmesseinrichtungen 118a, 118b lassen sich die auf die Vorder- und Hinterachse der Zugmaschine 100 wirkenden Kräfte erfassen, aus welchen Informationen zu der Kurvenfahrt der Zugmaschine 100 abgeleitet werden können.

Mittels des Drehratensensors 120 kann die Drehrate der Zugmaschine 100 erfasst werden, sodass auch auf Grundlage der Daten des Drehratensensors 120 Informationen zu der Kurvenfahrt der Zugmaschine 100 abgeleitet werden können.

Der Positionssensor 122 umfasst ein Satellitennavigationsmodul und dient zur Erfassung geografischer Positionsdaten. Die Historie der geographischen Positionsdaten wird zwischengespeichert, sodass auf Grundlage der Historie der geographischen Positionsdaten direkt Informationen zu der Kurvenfahrt der Zugmaschine 100 hergeleitet werden können.

Der Lenkwinkelsensor 124 erfasst den Lenkwinkel der Zugmaschine 100 und liefert somit direkte Informationen zu der Kurvenfahrt der Zugmaschine 100.

Der Wegaufnehmer 126 dient zur Erfassung der Auslenkung der Lenker der Kupplungseinrichtung 102 der Zugmaschine 100, woraus ebenfalls Informationen zu der Kurvenfahrt der Zugmaschine 100 abgeleitet werden können. Die Kupplungseinrichtung 102 umfasst vorzugsweise zwei Unterlenker und einen Oberlenker.

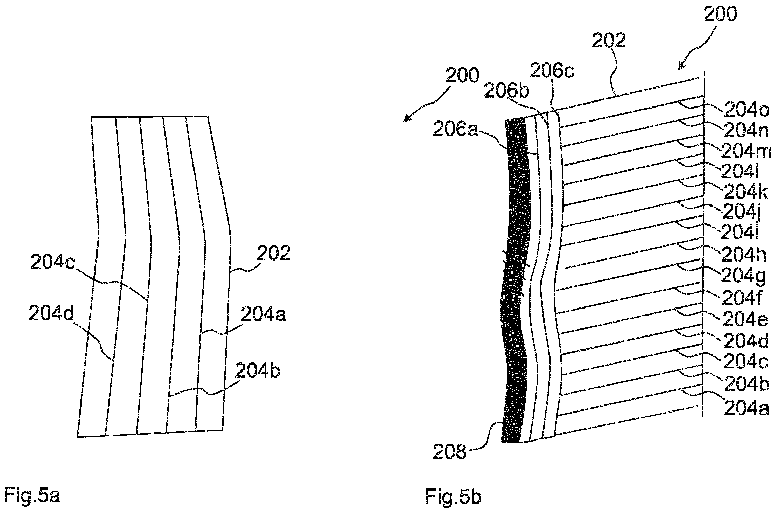

Die Fig. 5a zeigt eine Feldkontur 200, deren Feldgrenze 202 parallel verlaufende Begrenzungsabschnitte aufweist. Die Feldgrenze 202 weist an zwei gegenüberliegenden Abschnitten jeweils eine Knickung auf. Der Boden des Feldes kann weitestgehend mit gradlinig verlaufenden Fahrspuren 204a-204d bearbeitet werden. Das erfindungsgemäße Verfahren und das erfindungsgemäße landwirtschaftliche Bodenbearbeitungsgerät erlauben in dem Bereich der Knickung eine Kurvenfahrt ohne Unterbrechung des Bearbeitungsvorgangs und ohne wesentliche Kraftstoff- und Verschleißerhöhung durch entstehende Seitenkräfte an dem landwirtschaftlichen Bodenbearbeitungsgerät.

Die Fig. 5b zeigt eine Feldkontur 200 mit Vorgewendefahrspuren 206a-206c an einem Bachlauf 208. Beim Anlegen des Vorgewendes können mit dem erfindungsgemäßen Verfahren und dem erfindungsgemäßen landwirtschaftlichen Bodenbearbeitungsgerät kurvenreiche Vorgewendefahrspuren 206a-206c erzeugt werden, ohne dass der Kraftstoffverbrauch und der Verschleiß erhöht wird. Die übrigen Fahrspuren 204a-204o können gradlinig verlaufen.

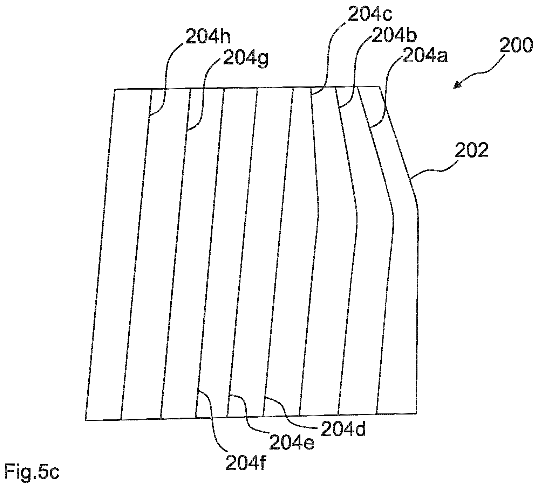

Die Fig. 5c zeigt eine Feldkontur 200, deren Feldgrenze 202 einseitig eine Knickung aufweist. Durch eine geeignete Verstellung der Arbeitsbreite können die notwendigen Kurvenfahrten in den Fahrspuren 204a-204c sukzessive verringert werden, bis geradlinige Fahrspuren 204d-204h über die gesamte Feldlänge umgesetzt werden können.

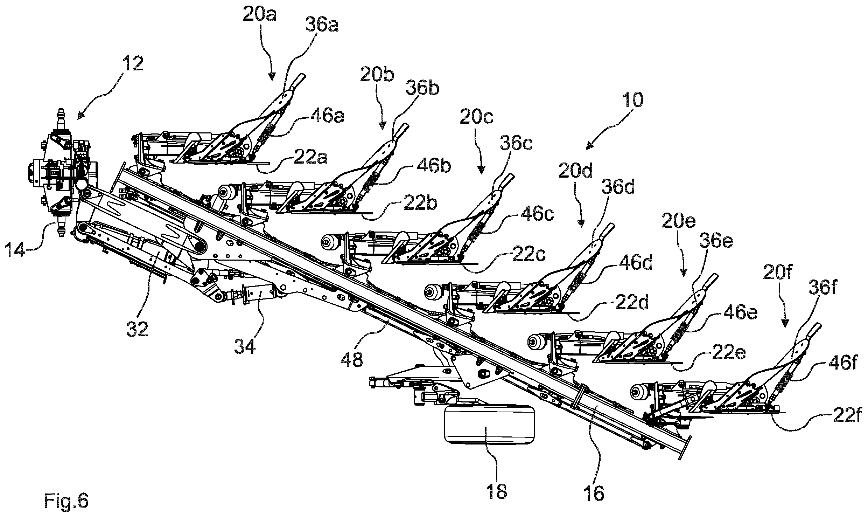

Die Fig. 6 zeigt ein als Pflug ausgebildetes landwirtschaftliches Bodenbearbeitungsgerät 10. Die Bodenbearbeitungswerkzeuge 20a-20f sind als Pflugschare ausgebildet und an einen Tragrahmen 16 befestigt.

Die Ausrichtung der Anlagebleche 22a-22f gegenüber dem Tragrahmen 16 kann grundsätzlich auf zwei unterschiedliche Arten erfolgen. Bei einer ersten Verstellvariante werden die Anlagebleche 22a-22f beim Ausrichten gegenüber dem Tragrahmen 16 auch relativ zu den jeweiligen Pflugkörpern 36a-36f bewegt. Hierzu ist an den Bodenbearbeitungswerkzeugen 20a-20f jeweils eine Werkzeugverstelleinrichtung 46a-46f angeordnet, welche dazu eingerichtet ist, die Ausrichtung der Anlagebleche 22a-22f in Bezug auf den jeweiligen Pflugkörper 36a-36f und somit in Bezug auf den Tragrahmen 16 auf Grundlage eines entsprechenden Steuerungsbefehls zu ändern. Alternativ oder zusätzlich kann die Verstellung der Anlagebleche 22a-22f gegenüber dem Tragrahmen 16 auch derart erfolgen, dass beim Ausrichten der Anlagebleche 22a-22f gegenüber dem Tragrahmen 16 gleichzeitig die jeweiligen Pflugkörpern 36a-36f gegenüber dem Tragrahmen 16 ausgerichtet werden. In diesem Fall sind jeweils ein Anlageblech 22a-22f und ein Pflugkörper 36a-36f einer Schareinheit zugeordnet, welche einheitlich mittels der zentralen Verstelleinrichtung 48 gegenüber dem Tragrahmen 16 verdreht werden kann. Die zentrale Verstelleinrichtung 48 kann eine Stange umfassen, welche parallel zum Tragrahmen 16 verläuft und mit sämtlichen Schareinheiten verbunden ist. Durch Verschieben der Stange der zentralen Verstelleinrichtung 48 werden sämtliche Anlagebleche 22a-22f und sämtliche Pflugkörper 36a-36f gemeinsam gedreht. Die Verschiebung der Stange kann beispielsweise über einen Stellzylinder, insbesondere einen Hydraulikzylinder, erfolgen. Das erfindungsgemäße landwirtschaftliche Bodenbearbeitungsgerät 10 kann die Werkzeugverstelleinrichtung 46a-46f und/oder die zentrale Verstelleinrichtung 48 umfassen.

Das landwirtschaftliche Bodenbearbeitungsgerät 10 kann außerdem eine Vorderfurchenverstelleinrichtung 32 und eine Arbeitsbreitenverstelleinrichtung 34 umfassen. Die Vorderfurchenverstelleinrichtung 32 umfasst einen Vorderfurcheneinstellzylinder und ist dazu eingerichtet, die Vorderfurchenbreite des landwirtschaftlichen Bodenbearbeitungsgeräts 10 auf Grundlage eines entsprechenden Steuerungsbefehls zu ändern. Die Arbeitsbreitenverstelleinrichtung 34 umfasst einen Arbeitsbreiteneinstellzylinder und ist dazu eingerichtet, die Arbeitsbreite des landwirtschaftlichen Bodenbearbeitungsgeräts 10 auf Grundlage eines entsprechenden Steuerungsbefehls zu ändern.

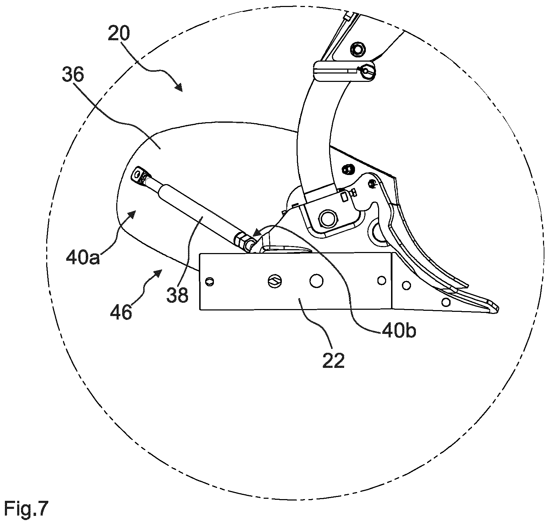

Die Fig. 7 zeigt eine optionale Konfiguration, bei welcher das Anlageblech 22 der Bodenbearbeitungswerkzeuge 20 über eine Werkzeugverstelleinrichtung 46 mit dem Pflugkörper 36 verbunden ist. Die Werkzeugverstelleinrichtung 46 umfasst ein als Stellzylinder ausgebildetes Stellelement 38, mittels welchem das Anlageblech 22 gegenüber dem Pflugkörper 36 ausgerichtet werden kann. Das Stellelement 38 ist über Verbindungsstreben mit den Befestigungen 40a, 40b verbunden, wobei die Befestigung 40a an dem Pflugkörper 36 und die Befestigung 40b an dem Anlageblech 22 angeordnet ist.

### Bezugszeichenliste

- 10: landwirtschaftliches Bodenbearbeitungsgerät
- 12: Kupplungseinrichtung
- 14: Unterlenkertraverse
- 16: Tragrahmen
- 18: Stützrad
- 20, 20a-20f: Bodenbearbeitungswerkzeuge
- 22, 22a-22f: Anlagebleche
- 24a-24f: Verdrehrichtung der Anlagebleche
- 26a, 26b: Kraftmesseinrichtungen
- 28: Drehratensensor
- 30: Positionssensor
- 32: Vorderfurchenverstelleinrichtung
- 34: Arbeitsbreitenverstelleinrichtung
- 36, 36a-36f: Pflugkörper
- 38: Stellelement
- 40a, 40b: Befestigung
- 42: Erfassungseinrichtung
- 44: Steuerungseinrichtung
- 46, 46a-46f: Werkzeugverstelleinrichtungen
- 48: zentrale Verstelleinrichtung
- 100: Zugmaschine
- 102: Kupplungseinrichtung
- 104a, 104b: Unterlenker
- 106: Kurvenrichtung
- 108a, 108b: Vorderräder
- 110a, 110b: Hinterräder
- 112: Führerkabine
- 114: Richtung der Unterlenkerauslenkung
- 116: Richtung der Unterlenkerkorrektur
- 118a, 118b: Kraftmesseinrichtungen
- 120: Drehratensensor
- 122: Positionssensor
- 124: Lenkwinkelsensor
- 126: Wegaufnehmer

- 200: Feldkontur
- 202: Feldgrenze
- 204a-204o: Fahrspuren
- 206a-206c: Vorgewendefahrspuren
- 208: Bachlauf

## Patentansprüche

1. Verfahren zum Steuern eines von einer Zugmaschine (100) gezogenen, als Pflug ausgeführten landwirtschaftlichen Bodenbearbeitungsgeräts (10) mit dem Schritt:
- Erfassen von Informationen zu einer Kurvenfahrt der Zugmaschine (100) und/oder des landwirtschaftlichen Bodenbearbeitungsgeräts (10);
**gekennzeichnet durch** den Schritt:
- selbsttätiges Anpassen der Geräteeinstellung des landwirtschaftlichen Bodenbearbeitungsgeräts (10) in Abhängigkeit der Informationen zu der Kurvenfahrt der Zugmaschine (100) und/oder des landwirtschaftlichen Bodenbearbeitungsgeräts (10).

2. Verfahren nach Anspruch 1,
**dadurch gekennzeichnet, dass** das selbsttätige Anpassen der Geräteeinstellung des landwirtschaftlichen Bodenbearbeitungsgeräts (10) in Abhängigkeit der Informationen zu der Kurvenfahrt der Zugmaschine (100) und/oder des landwirtschaftlichen Bodenbearbeitungsgeräts (10) zumindest einen der folgenden Schritte umfasst:
- Ändern der Ausrichtung von Bodenbearbeitungswerkzeugen (20, 20a-20f) in Bezug auf einen Tragrahmen (16) des landwirtschaftlichen Bodenbearbeitungsgeräts (10), an welchem die Bodenbearbeitungswerkzeuge (20, 20a-20f) angeordnet sind;
- Ändern der Arbeitsbreite des landwirtschaftlichen Bodenbearbeitungsgeräts (10).

3. Verfahren nach Anspruch 1 oder 2,
**dadurch gekennzeichnet, dass** das Ändern der Ausrichtung von Bodenbearbeitungswerkzeugen (20, 20a-20f) in Bezug auf den Tragrahmen (16) des landwirtschaftlichen Bodenbearbeitungsgeräts (10) zumindest einen der folgende Schritte umfasst:
- Verstellen des Anlagewinkels der als Pflugschare ausgebildeten Bodenbearbeitungswerkzeuge (20, 20a-20f);
- Verstellen von Anlageblechen (22, 22a-22f) der als Pflugschare ausgebildeten Bodenbearbeitungswerkzeuge (20, 20a-20f).

4. Verfahren nach einem der vorstehenden Ansprüche,
**dadurch gekennzeichnet, dass** das landwirtschaftliche Bodenbearbeitungsgerät (10) als Pflug ausgebildet ist und das selbsttätige Anpassen der Geräteeinstellung des landwirtschaftlichen Bodenbearbeitungsgeräts (10) in Abhängigkeit der Informationen zu der Kurvenfahrt der Zugmaschine (100) und/oder des landwirtschaftlichen Bodenbearbeitungsgeräts (10) zumindest einen der folgenden Schritte umfasst:
- Ändern der Vorderfurchenbreite des landwirtschaftlichen Bodenbearbeitungsgeräts (10);
- Ändern der Zuglinie zwischen dem landwirtschaftlichen Bodenbearbeitungsgerät (10) und der Zugmaschine (100).

5. Verfahren nach einem der vorstehenden Ansprüche,
**dadurch gekennzeichnet, dass** das selbsttätige Anpassen der Geräteeinstellung des landwirtschaftlichen Bodenbearbeitungsgeräts (10) direkt auf Grundlage der erfassten Informationen zu der Kurvenfahrt der Zugmaschine (100) und/oder des landwirtschaftlichen Bodenbearbeitungsgeräts (10) oder indirekt auf Grundlage von einer oder mehreren aus den Informationen zu der Kurvenfahrt der Zugmaschine (100) und/oder des landwirtschaftlichen Bodenbearbeitungsgeräts (10) berechneten Kurveneigenschaften erfolgt.

6. Verfahren nach einem der vorstehenden Ansprüche,
**dadurch gekennzeichnet, dass** das Erfassen von Informationen zu einer Kurvenfahrt der Zugmaschine (100) und/oder des landwirtschaftlichen Bodenbearbeitungsgeräts (10) zumindest einen der folgenden Schritte umfasst:
- Erfassen des Lenkwinkels der Zugmaschine (100);
- Erfassen der Drehrate und/oder der Geschwindigkeit der Zugmaschine (100) und/oder des landwirtschaftlichen Bodenbearbeitungsgeräts (10);
- Erfassen der Längsbeschleunigung und/oder der Querbeschleunigung der Zugmaschine (100) und/oder des landwirtschaftlichen Bodenbearbeitungsgeräts (10);
- Erfassen von geographischen Positionsdaten der Zugmaschine (100) und/oder des landwirtschaftlichen Bodenbearbeitungsgeräts (10), insbesondere unter Verwendung eines Satellitensystems;
- Abrufen von Daten aus einer digitalen Karte, wobei die Daten vorzugsweise Spurdaten umfassen.

7. Verfahren nach einem der vorstehenden Ansprüche,
**dadurch gekennzeichnet, dass** das Erfassen von Informationen zu einer Kurvenfahrt der Zugmaschine (100) und/oder des landwirtschaftlichen Bodenbearbeitungsgeräts (10) zumindest einen der folgenden Schritte umfasst:
- Erfassen von einer oder mehreren auf das landwirtschaftliche Bodenbearbeitungsgerät (10) wirkenden Kräften, insbesondere an einer Unterlenkertraverse (14) des landwirtschaftlichen Bodenbearbeitungsgeräts (10);
- Erfassen von einer oder mehreren auf die Zugmaschine (100) wirkenden Kräften, insbesondere die auf die Unterlenker der Zugmaschine (100) wirkenden Kräfte;
- Erfassen der Auslenkung eines oder mehrerer Lenker der Zugmaschine (100), insbesondere der Unterlenker oder eines Oberlenkers;
- Erfassen der auf die Achsen der Zugmaschine (100) wirkenden Kräfte.

8. Verfahren nach einem der vorstehenden Ansprüche,
**dadurch gekennzeichnet, dass** das Erfassen von Informationen zu einer Kurvenfahrt der Zugmaschine (100) und/oder des landwirtschaftlichen Bodenbearbeitungsgeräts (10) durch die Zugmaschine (100) und/oder das landwirtschaftliche Bodenbearbeitungsgerät (10) erfolgt.

9. Als Pflug ausgeführtes Landwirtschaftliches Bodenbearbeitungsgerät (10) mit
- einer Erfassungseinrichtung (42), welche dazu eingerichtet ist, Informationen zu einer Kurvenfahrt des landwirtschaftlichen Bodenbearbeitungsgeräts (10) und/oder einer das landwirtschaftliche Bodenbearbeitungsgerät (10) ziehenden Zugmaschine (100) zu erfassen;
**gekennzeichnet durch** eine Steuerungseinrichtung (44), welche dazu eingerichtet ist, einen Steuerungsbefehl zum selbsttätigen Anpassen der Geräteeinstellung des landwirtschaftlichen Bodenbearbeitungsgeräts (10) in Abhängigkeit der Informationen zu der Kurvenfahrt der Zugmaschine (100) und/oder des landwirtschaftlichen Bodenbearbeitungsgeräts (10) zu erzeugen.

10. Landwirtschaftliches Bodenbearbeitungsgerät (10) nach Anspruch 9, wobei das landwirtschaftliche Bodenbearbeitungsgerät (10) Bodenbearbeitungswerkzeuge (20, 20a-20f), insbesondere Pflugschare, und einen Tragrahmen (16), an welchem die Bodenbearbeitungswerkzeuge (20, 20a-20f) angeordnet sind, aufweist,
**gekennzeichnet durch** eine Werkzeugverstelleinrichtung (46, 46a-46f) und/oder eine zentrale Verstelleinrichtung (48), welche dazu eingerichtet sind, die Ausrichtung der Bodenbearbeitungswerkzeuge (20, 20a-20f) in Bezug auf den Tragrahmen (16) auf Grundlage des Steuerungsbefehls zu ändern.

11. Landwirtschaftliches Bodenbearbeitungsgerät (10) nach Anspruch 9 oder 10, ferner umfassend:
- eine Arbeitsbreitenverstelleinrichtung (34), welche dazu eingerichtet ist, die Arbeitsbreite des landwirtschaftlichen Bodenbearbeitungsgeräts (10) auf Grundlage des Steuerungsbefehls zu ändern;
- eine Vorderfurchenverstelleinrichtung (32), welche dazu eingerichtet ist, die Vorderfurchenbreite des landwirtschaftlichen Bodenbearbeitungsgeräts (10) auf Grundlage des Steuerungsbefehls zu ändern; und/oder
- eine Zuglinienverstelleinrichtung, welche dazu eingerichtet ist, den Verlauf der Zuglinie zwischen dem landwirtschaftlichen Bodenbearbeitungsgerät (10) und der Zugmaschine (100) auf Grundlage des Steuerungsbefehls zu ändern.

12. Landwirtschaftliches Bodenbearbeitungsgerät (10) nach einem der Ansprüche 9 bis 11,
**dadurch gekennzeichnet, dass** die Erfassungseinrichtung (42) einen Lenkwinkelsensor, einen Drehratensensor (28), einen Geschwindigkeitssensor, einen oder mehrere Beschleunigungssensoren, ein Satellitennavigationsmodul und/oder eine Einrichtung zum Abrufen von digitalem Kartenmaterial umfasst.

13. Landwirtschaftliches Bodenbearbeitungsgerät (10) nach einem der Ansprüche 9 bis 12,
**dadurch gekennzeichnet, dass** die Erfassungseinrichtung (42) eine oder mehrere Kraftmesseinrichtungen (26a, 26b) umfasst, welche dazu eingerichtet sind, eine oder mehrere auf das landwirtschaftliche Bodenbearbeitungsgerät (10) wirkende Kräfte, insbesondere die auf eine Unterlenkertraverse (14) des landwirtschaftlichen Bodenbearbeitungsgeräts (10) wirkenden Kräfte, zu erfassen.

## Claims

1. Method for controlling an agricultural soil preparation implement (10) which is pulled by a tractor (100) and embodied as a plough, comprising the step:
- acquiring information about cornering of the tractor (100) and/or of the agricultural soil preparation implement (10);
**characterized by** the step:
- automatic adaptation of the implement setting of the agricultural soil preparation implement (10) in accordance with the information about the cornering of the tractor (100) and/or of the agricultural soil preparation implement (10) .

2. Method according to Claim 1,
**characterized in that** the automatic adaption of the implement setting of the agricultural soil preparation implement (10) in accordance with the information about the cornering of the tractor (100) and/or of the agricultural soil preparation implement (10) comprises at least one of the following steps:
- changing the orientation of soil preparation tools (20, 20a-20f) with respect to a supporting frame (16) of the agricultural soil preparation implement (10) on which the soil preparation tools (20, 20a-20f) are arranged;
- changing the working width of the agricultural soil preparation implement (10).

3. Method according to Claim 1 or 2,
**characterized in that** the changing of the orientation of soil preparation tools (20, 20a-20f) with respect to the supporting frame (16) of the agricultural soil preparation implement (10) comprises at least one of the following steps:
- adjusting the bearing angle of the soil preparation tools (20, 20a-20f) which are embodied as ploughshares;
- adjusting bearing plates (22, 22a-22f) of the soil preparation tools (20, 20a-20f) which are embodied as ploughshares.

4. Method according to one of the preceding claims,
**characterized in that** the agricultural soil preparation implement (10) is embodied as a plough, and the automatic adaptation of the implement setting of the agricultural soil preparation implement (10) in accordance with the information about the cornering of the tractor (100) and/or on the agricultural soil preparation implement (10) comprises at least one of the following steps:
- changing the front furrow width of the agricultural soil preparation implement (10);
- changing the pulling line between the agricultural soil preparation implement (10) and the tractor (100).

5. Method according to one of the preceding claims,
**characterized in that** the automatic adaptation of the implement setting of the agricultural soil preparation implement (10) is carried out directly on the basis of the acquired information about the cornering of the tractor (100) and/or of the agricultural soil preparation implement (10) or indirectly on the basis of one or more cornering properties calculated from the information on the corning of the tractor (100) and/or of the agricultural soil preparation implement (10).

6. Method according to one of the preceding claims,
**characterized in that** the acquisition of information about the cornering of the tractor (100) and/or of the agricultural soil preparation implement (10) comprises at least one of the following steps:
- sensing the steering angle of the tractor (100) ;
- sensing the rotational speed and/or the speed of the tractor (100) and/or of the agricultural soil preparation implement (10);
- sensing the longitudinal acceleration and/or the lateral acceleration of the tractor (100) and/or of the agricultural soil preparation implement (10);
- sensing geographic position data of the tractor (100) and/or of the agricultural soil preparation implement (10), in particular using a satellite system;
- retrieving data from a digital map, wherein the data preferably comprises track data.

7. Method according to one of the preceding claims,
**characterized in that** the acquisition of information about cornering of the tractor (100) and/or of the agricultural soil preparation implement (10) comprises at least one of the following steps:
- sensing one or more forces acting on the agricultural soil preparation implement (10), in particular on a lower link crossmember (14) of the agricultural soil preparation implement (10) ;
- sensing one or more forces acting on the tractor (100), in particular forces acting on the lower links of the tractor (100);
- sensing the deflection of one or more links of the tractor (100), in particular the lower links or an upper link;
- sensing the forces acting on the axles of the tractor (100).

8. Method according to one of the preceding claims,
**characterized in that** the acquisition of information about cornering of the tractor (100) and/or of the agricultural soil preparation implement (10) is carried out by the tractor (100) and/or by the agricultural soil preparation implement (10).

9. Agricultural soil preparation implement (10) which is embodied as a plough and has
- a sensing device (42) which is configured to acquire information about cornering of the agricultural soil preparation implement (10) and/or of a tractor (100) which pulls the agricultural soil preparation implement (10);
**characterized by** a control device (44) which is configured to generate a control instruction for the automatic adaptation of the implement setting of the agricultural soil preparation implement (10) in accordance with the information about the cornering of the tractor (100) and/or of the agricultural soil preparation implement (10).

10. Agricultural soil preparation implement (10) according to Claim 9, wherein the agricultural soil preparation implement (10) has soil preparation tools (20, 20a-20f), in particular ploughshares, and a supporting frame (16) on which the soil preparation tools (20, 20a-20f) are arranged,
**characterized by** a tool adjustment device (46, 46a-46f) and/or a central adjustment device (48) which is configured to change the orientation of the soil preparation tools (20, 20a-20f) with respect to the supporting frame (16) on the basis of the control instruction.

11. Agricultural soil preparation implement (10) according to Claim 9 or 10, also comprising:
- a working width adjustment device (34) which is configured to change the working width of the agricultural soil preparation implement (10) on the basis of the control instruction;
- a front furrow adjustment device (32) which is configured to change the front furrow width of the agricultural soil preparation implement (10) on the basis of the control instruction; and/or
- a pulling line adjustment device which is configured to change the progression of the pulling line between the agricultural soil preparation implement (10) and the tractor (100) on the basis of the control instruction.

12. Agricultural soil preparation implement (10) according to one of Claims 9 to 11,
**characterized in that** the sensing device (42) comprises a steering angle sensor, a rotational speed sensor (28), a speed sensor, one or more acceleration sensors, a satellite navigation module and/or a device for retrieving digital map material.

13. Agricultural soil preparation implement (10) according to one of Claims 9 to 12,
**characterized in that** the sensing device (42) comprises one or more force-measuring devices (26a, 26b) which are configured to sense one or more forces acting on the agricultural soil preparation implement (10), in particular the forces acting on a lower link crossmember (14) of the agricultural soil preparation implement (10).

## Revendications

1. Procédé de commande d'un appareil agricole de traitement de sol (10) qui est tiré par un tracteur (100) et qui est conçu comme une charrue, le procédé comprenant l'étape suivante :
- acquérir des informations sur un virage pris par le tracteur (100) et/ou l'appareil agricole de traitement de sol (10) ;
**caractérisé par** l'étape suivante :
- adapter automatiquement le réglage de l'appareil agricole de traitement de sol (10) en fonction des informations sur le virage pris par le tracteur (100) et/ou l'appareil agricole de traitement de sol (10).

2. Procédé selon la revendication 1,
**caractérisé en ce que** l'adaptation automatique du réglage de l'appareil agricole de traitement de sol (10) en fonction des informations sur le virage pris par le tracteur (100) et/ou l'appareil agricole de traitement de sol (10) comprend l'une au moins des étapes suivantes :
- modifier l'orientation d'outils de traitement de sol (20, 20a-20f) par rapport à un châssis de support (16) de l'appareil agricole de traitement de sol (10) sur lequel sont disposés les outils de traitement de sol (20, 20a-20f) ;
- modifier la largeur de travail de l'appareil agricole de traitement de sol (10).

3. Procédé selon la revendication 1 ou 2,
**caractérisé en ce que** la modification de l'orientation d'outils de traitement de sol (20, 20a-20f) par rapport au châssis de support (16) de l'appareil agricole de traitement de sol (10) comprend l'une au moins des étapes suivantes :
- régler l'angle d'appui des outils de traitement de sol (20, 20a-20f) conçus comme des socs de charrue ;
- régler des plaques d'appui (22, 22a-22f) des outils de traitement de sol (20, 20a-20f) conçus comme des socs de charrue.

4. Procédé selon l'une des revendications précédentes, **caractérisé en ce que** l'appareil agricole de traitement de sol (10) est conçu comme une charrue et l'adaptation automatique du réglage de l'appareil agricole de traitement de sol (10) en fonction des informations concernant le virage pris par le tracteur (100) et/ou l'appareil agricole de traitement de sol (10) comprend l'une au moins des étapes suivantes :
- modifier la largeur de sillon avant de l'appareil agricole de traitement de sol (10) ;
- modifier la ligne de traction entre l'appareil agricole de traitement de sol (10) et le tracteur (100) .

5. Procédé selon l'une des revendications précédentes, **caractérisé en ce que** l'adaptation automatique du réglage de l'appareil agricole de traitement de sol (10) est effectuée directement sur la base des informations acquises concernant le virage pris par le tracteur (100) et/ou l'appareil agricole de traitement de sol (10) ou indirectement sur la base d'une ou de plusieurs propriétés de virage calculées à partir des informations concernant le virage pris par le tracteur (100) et/ou l'appareil agricole de traitement de sol (10).

6. Procédé selon l'une des revendications précédentes, **caractérisé en ce que** l'acquisition d'informations concerne le virage pris par le tracteur (100) et/ou l'appareil agricole de traitement de sol (10) comprend l'une au moins des étapes suivantes :
- détecter l'angle de braquage du tracteur (100) ;
- détecter la vitesse de rotation et/ou la vitesse du tracteur (100) et/ou de l'appareil agricole de traitement de sol (10) ;
- détecter l'accélération longitudinale et/ou l'accélération transversale du tracteur (100) et/ou de l'appareil agricole de traitement de sol (10) ;
- acquérir des données de position géographique du tracteur (100) et/ou de l'appareil agricole de traitement de sol (10), notamment à l'aide d'un système satellite ;
- récupérer des données d'une carte numérique, les données comprenant de préférence des données de piste.

7. Procédé selon l'une des revendications précédentes, **caractérisé en ce que** l'acquisition d'informations concernant un virage pris par le tracteur (100) et/ou l'appareil agricole de traitement de sol (10) comprend l'une au moins des étapes suivantes :
- détecter une ou plusieurs forces agissant sur l'appareil agricole de traitement de sol (10), en particulier une traverse de bielle inférieure (14) de l'appareil agricole de traitement de sol (10) ;
- détecter une ou plusieurs forces agissant sur le tracteur (100), en particulier les forces agissant sur la bielle inférieure du tracteur (100) ;
- détecter la déviation d'une ou plusieurs bielles du tracteur (100), en particulier la bielle inférieure ou une bielle supérieure ;
- détecter les forces agissant sur les essieux du tracteur (100).

8. Procédé selon l'une des revendications précédentes, **caractérisé en ce que** l'acquisition d'informations sur un virage pris par le tracteur (100) et/ou l'appareil agricole de traitement de sol (10) est effectuée par le tracteur (100) et/ou l'appareil agricole de traitement de sol (10).

9. Appareil agricole de traitement de sol (10) conçu comme une charrue, ledit appareil comprenant
- un dispositif de détection (42) qui est conçu pour détecter des informations concernant un virage pris par l'appareil agricole de traitement de sol (10) et/ou un tracteur (100) tirant l'appareil agricole de traitement de sol (10) ;
**caractérisé par** un dispositif de commande (44) qui est conçu pour générer une instruction de commande destinée à adapter automatiquement le réglage de l'appareil agricole de traitement de sol (10) en fonction des informations concernant le virage pris par le tracteur (100) et/ou l'appareil agricole de traitement de sol (10) .

10. Appareil agricole de traitement de sol (10) selon la revendication 9,
l'appareil agricole de traitement de sol (10) comportant des outils de traitement de sol (20, 20a-20f), en particulier des socs de charrue, et un châssis de support (16) sur lequel sont disposés les outils de traitement de sol (20, 20a-20f),
**caractérisé par** un dispositif de réglage d'outil (46, 46a-46f) et/ou un dispositif de réglage central (48) qui sont conçus pour modifier l'orientation des outils de traitement de sol (20, 20a-20f) par rapport au châssis de support (16) sur la base de l'instruction de commande.

11. Appareil agricole de traitement de sol (10) selon la revendication 9 ou 10, comprenant en outre :
- un dispositif de réglage de largeur de travail (34) qui est conçu pour modifier la largeur de travail de l'appareil agricole de traitement de sol (10) sur la base de l'instruction de commande ;
- un dispositif de réglage de sillon avant (32) qui est conçu pour modifier la largeur de sillon avant de l'appareil agricole de traitement de sol (10) sur la base de l'instruction de commande ; et/ou
- un dispositif de réglage de ligne de traction qui est conçu pour modifier le tracé de la ligne de traction entre l'appareil agricole de traitement de sol (10) et le tracteur (100) sur la base de l'instruction de commande.

12. Appareil agricole de traitement de sol (10) selon l'une des revendications 9 à 11, **caractérisé en ce que** le dispositif de détection (42) comprend un capteur d'angle de braquage, un capteur de vitesse de rotation (28), un capteur de vitesse, un ou plusieurs capteurs d'accélération, un module de navigation par satellite et/ou un dispositif de récupération de données cartographiques numériques.

13. Appareil agricole de traitement de sol (10) selon l'une des revendications 9 à 12, **caractérisé en ce que** le dispositif de détection (42) comprend un ou plusieurs dispositifs de mesure de force (26a, 26b) qui sont conçus pour détecter une ou plusieurs forces agissant sur l'appareil agricole de traitement de sol (10), en particulier les forces agissant sur une traverse de bielle inférieure (14) de l'appareil agricole de traitement de sol (10).
